# FASCICULE DE BREVET EUROPEEN

(11) **EP 2 563 651 B1**
(45) Date de publication et mention de la délivrance du brevet: **23.03.2016**
(21) Numéro de dépôt: 11716530.8
(22) Date de dépôt: 22.04.2011
(51) Int. Cl.: B64C 1/06

(54) **STRUCTURE DE FUSELAGE D'AÉRONEF COMPORTANT UN DISPOSITIF ABSORBEUR D'ÉNERGIE**
RUMPFSTRUKTUR AUSGESTATTET MIT STOSSDÄMPFER
FUSELAGE STRUCTURE PROVIDED WITH AN IMPACT ENERGY ADORBING DEVICE

(30) Priorité: 30.04.2010 FR 1053347
(43) Date de publication de la demande: 06.03.2013
(73) Titulaire: European Aeronautic Defence And Space Company Eads France, 75016 Paris (FR)
(72) Inventeur: GUIMARD, Jean-Mathieu, F-75020 Paris (FR); BERMUDEZ, Michel, F-92150 Suresnes (FR); MESNAGE, Didier, F-92210 Saint Cloud (FR)
(74) Mandataire: Ipside
(86) Numéro de dépôt international: PCT/EP2011/056505
(87) Numéro de publication internationale: WO 2011/134917

(56) Documents cités:
- EP-A1- 1 426 289
- WO-A1-2009/101372
- WO-A1-2010/034594
- CN-A- 101 596 933

## Description

La présente invention concerne une structure de fuselage d'aéronef. Plus particulièrement, elle concerne une telle structure équipée d'un dispositif apte à absorber l'énergie cinétique provenant d'une sollicitation consécutive à un accident, tel qu'un atterrissage ou un amerrissage brutal, sur un fuselage, notamment un fuselage formé en matériau composite.

Un fuselage d'aéronef comporte principalement une structure constituée d'un revêtement, également appelé peau, qui est renforcé intérieurement par des cadres de renfort circonférentiels positionnés sensiblement perpendiculairement à un axe longitudinal du fuselage, et par des lisses disposées quant à elles sensiblement perpendiculairement auxdits cadres.

Lors d'un accident, ou crash, à composante principale verticale, tel par exemple qu'un atterrissage d'urgence, ou une rupture de train d'atterrissage, la partie inférieure du fuselage est, en général, la première zone de l'aéronef soumise à des impacts. Elle participe par conséquent de manière essentielle à l'absorption de l'énergie de ces impacts, qui induisent une déformation des cadres selon la direction circonférentielle.

La certification au crash des aéronefs, en particulier pour le transport de passagers, impose des critères de comportement du fuselage dans de telles situations d'accident.

Pour les fuselages dont les éléments structurels, notamment les cadres de renfort et les lisses, sont réalisés en matériaux métalliques, l'énergie délivrée lors d'un crash est à l'heure actuelle principalement absorbée par les cadres de renfort circonférentiels eux-mêmes. A cet effet, il est formé des zones de faiblesse structurale dans des positions choisies sur ces cadres. Une quantité importante de l'énergie de l'impact est ainsi absorbée par la déformation plastique des cadres métalliques dans ces zones de faiblesse dédiées. La fonction de déclenchement de l'absorption d'énergie est assurée, du fait de l'affaiblissement en rigidité des cadres au niveau des zones de faiblesse, par un rotulage des cadres dans ces zones privilégiées, et la fonction d'absorption d'énergie est assurée par la plastification du métal constituant le cadre.

La recherche constante d'amélioration de la performance des aéronefs implique le recours croissant à des matériaux composites pour la réalisation d'éléments structurels des fuselages d'aéronefs, en raison de l'allègement en masse que ces matériaux composites permettent d'obtenir, et de leurs performances bien connues en termes de comportement mécanique, tenue en fatigue, tolérance aux dommages, résistance à la corrosion, et dissipation d'énergie à l'échelle du stratifié.

Contrairement aux éléments structurels formés en matériaux métalliques, qui possèdent une capacité d'absorption d'énergie du fait de leurs caractéristiques intrinsèques de déformation plastique importante, les matériaux composites ne présentent pas cette capacité de déformation plastique avant rupture. Néanmoins, ils sont potentiellement capables d'apporter une absorption d'énergie plus importante que les matériaux métalliques dès lors que l'on sollicite les modes de ruptures différents et très énergétiques de ces matériaux. Une structure de fuselage réalisée en matériau composite se comporte par conséquent très différemment d'une structure de fuselage formée en matériau métallique vis-à-vis de l'absorption d'énergie. En réponse à une sollicitation de type crash, une structure de fuselage en matériau composite, qui est dimensionnée par rapport aux charges statiques classiques, ne peut assurer à elle-seule la fonction d'absorption de l'énergie délivrée lors d'un crash.

Les documents WO 2010 034 594 et WO 2009/101372 proposent une structure de fuselage d'aéronef comportant au moins un cadre de renfort et une traverse, et un élément structurel absorbeur d'énergie comportant une poutre de compression qui est fixée à une première extrémité à la traverse et à une seconde extrémité au cadre de renfort.

La présente invention vise à permettre de concilier la mise en oeuvre de matériaux composites pour la réalisation d'éléments de structure de fuselage d'aéronefs, et notamment des cadres de renfort circonférentiels, et les exigences de tenue au crash de telles structures de fuselage, en satisfaisant le besoin d'absorption de l'énergie due à un impact de type crash.

A cet effet, il est proposé selon la présente invention une structure de fuselage d'aéronef selon la revendication 1, comportant un cadre de renfort circonférentiel, sous forme d'un profilé, présentant une face concave, une face convexe opposée et deux faces latérales, et une pluralité de lisses sensiblement perpendiculaires audit cadre. Cette structure se caractérise en ce que le cadre comporte une zone affaiblie mécaniquement apte à provoquer un flambage localisé du cadre sous l'effet d'un effort de compression exercé sur le cadre selon la direction circonférentielle. Elle comporte un dispositif dit absorbeur d'énergie comportant deux organes effecteurs solidaires du cadre respectivement de part et d'autre de la zone affaiblie, et un noyau central maintenu entre les organes effecteurs de façon telle qu'une réduction de la distance entre les organes effecteurs induit une déformation dudit noyau central. Le noyau central est quant à lui apte à absorber l'énergie sous l'effet de ladite déformation.

Selon une caractéristique avantageuse de l'invention, la zone affaiblie mécaniquement et le dispositif absorbeur d'énergie associé sont disposés dans une partie inférieure du cadre, c'est-à-dire disposée dans une partie inférieure de la structure de fuselage, le terme inférieur étant ici défini par rapport à une position normale du fuselage en opération, et correspondant alors à la partie de la structure de fuselage la plus proche du sol. Lors d'un accident du type atterrissage d'urgence, impliquant un impact brutal de l'aéronef sur une surface de sol, c'est cette partie inférieure du cadre de renfort qui est sollicitée en premier lieu. De préférence, la zone affaiblie mécaniquement est disposée sensiblement dans un plan de symétrie longitudinal vertical du fuselage.

Dans des modes de réalisation préférés de l'invention, une pluralité, de préférence la totalité, des cadres de la structure de fuselage, sont pourvus d'une zone affaiblie mécaniquement et sont associés chacun à un dispositif absorbeur d'énergie selon l'invention.

Lors d'un crash impliquant un impact brutal sur la partie inférieure de la structure de fuselage, au-dessus de la limite de tenue à l'effort statique de cette dernière, il est exercé sur chaque cadre un effort combiné de compression selon la direction circonférentielle et de flexion, important. Selon l'invention, il est alors déclenché dans la zone affaiblie mécaniquement un flambage localisé du cadre, qui induit le rapprochement l'un vers l'autre des organes effecteurs du dispositif absorbeur d'énergie solidaires du cadre respectivement de part et d'autre de la zone affaiblie. Ce rapprochement tend à déformer le noyau central qui est maintenu bloqué entre les organes effecteurs, et la destruction progressive de ce dernier ainsi provoquée assure alors avantageusement la dissipation de l'énergie cinétique générée lors de l'impact.

La présente invention s'avère notamment tout à fait avantageuse dans le cadre de structures de fuselage dont les cadres de renfort sont formés en matériaux composites. Elle s'applique cependant également de manière similaire quel que soit le matériau entrant dans la constitution du cadre, et en particulier pour des cadres métalliques.

Suivant des modes de réalisation préférés, la présente invention répond en outre aux caractéristiques suivantes, mises en oeuvre séparément ou en chacune de leurs combinaisons techniquement opérantes.

Dans des modes de réalisation préférés de l'invention, le dispositif absorbeur d'énergie est réalisé principalement en matériaux composites à base de fibres noyées dans une matrice polymère.

Dans des variantes de l'invention, le noyau central est fixé aux deux organes effecteurs. Le dispositif absorbeur d'énergie selon l'invention participe alors à la tenue aux efforts statiques exercés sur le cadre en opération de l'aéronef.

Dans d'autres variantes de l'invention, le noyau central est fixé à un seul des deux organes effecteurs. Il existe alors un jeu entre le noyau central et le second organe effecteur, si bien que le dispositif absorbeur d'énergie selon l'invention n'est alors avantageusement pas sollicité durant les phases d'opération normales de l'aéronef, pour la participation à la résistance aux charges courantes statiques ou quasi-statiques exercées sur le cadre, mais uniquement en cas d'impact brutal exercé sur ce dernier.

Les organes effecteurs selon l'invention se présentent de préférence sous forme de plaques rigides, qui sont disposées sensiblement parallèlement l'une à l'autre, de sorte à s'étendre sensiblement perpendiculairement au cadre, et selon l'axe longitudinal de la structure de fuselage. Préférentiellement, ces plaques sont disposées de telle sorte qu'une face de chaque plaque coïncide sensiblement avec une face dite d'extrémité longitudinale du noyau absorbant disposée en vis-à-vis, si bien que la réduction de la distance entre les plaques effectrices entraîne une compression du noyau central sensiblement uniforme sur toute la surface de ce dernier.

Selon une caractéristique avantageuse de l'invention, un premier organe effecteur est une plaque rigide percée de lumières traversantes. De préférence, cette plaque rigide est alors formée en un matériau métallique, de préférence en un métal durci. Dans une telle configuration particulièrement avantageuse de l'invention, consécutivement à un impact brutal, la matière constituant le noyau central est hachée progressivement à travers les lumières de la plaque effectrice contre laquelle elle est comprimée. Il est ainsi favorisé une dégradation progressive de la matière constituant le noyau central absorbant, qui stabilise et accroît le phénomène d'absorption d'énergie due à cet impact par le noyau.

Dans des modes de réalisation préférés de l'invention, les lumières traversantes comportent des bordures périphériques faisant saillie sur une face de la plaque en vis-à-vis du noyau central, et qui permettent avantageusement d'initier la découpe du noyau central, et de réduire par conséquent le pic d'effort lors du contact entre le noyau central et la plaque effectrice.

Selon l'invention, les deux organes effecteurs peuvent avantageusement répondre à une telle caractéristique.

Dans la combinaison de caractéristiques particulièrement avantageuse selon l'invention, dans laquelle un seul organe effecteur est fixé au noyau central, et un seul organe effecteur se présente sous la forme d'une plaque rigide percée de lumières traversantes, ces deux organes effecteurs sont de préférence différents. Ainsi, le premier organe effecteur, défini comme l'organe effecteur se présentant sous la forme d'une plaque percée de lumières traversantes, n'est préférentiellement pas fixé au noyau central du dispositif absorbeur d'énergie.

Dans des modes de réalisation préférés de l'invention, les organes effecteurs sont fixés au cadre par l'intermédiaire de pièces de liaison fixées au cadre respectivement de part et d'autre de la zone affaiblie.

Dans une variante de l'invention, le noyau central, les organes effecteurs et les pièces de liaison sont formés en monobloc. Dans une autre variante également tout à fait avantageuse, il s'agit de pièces indépendantes, fixées le cas échéant les unes aux autres, selon la configuration particulière du dispositif absorbeur d'énergie, par des moyens de fixation classiques en eux-mêmes, par exemple par collage ou par vissage.

Suivant une caractéristique avantageuse de l'invention, le dispositif absorbeur d'énergie comporte des éléments de renfort latéraux fixés d'une part aux pièces de liaison et d'autre part aux pieds de lisses de la structure de fuselage.

Dans des modes de réalisation préférés de l'invention, la zone affaiblie mécaniquement est formée par une échancrure radiale ménagée dans le cadre. Cette échancrure débouche de préférence sur la face concave du cadre. De manière générale, la forme, le positionnement sur le cadre et les dimensions de l'échancrure sont déterminés par des calculs du ressort de l'homme du métier, en relation avec les caractéristiques intrinsèques du cadre, de sorte à assurer une déformation par flambage du cadre dans des seuils répondant aux exigences de sécurité requises pour des caractéristiques d'impact données.

Préférentiellement, l'échancrure est formée au droit du centre du dispositif absorbeur d'énergie selon l'invention.

Tout autre mode de réalisation d'une zone affaiblie mécaniquement entre également dans le cadre de l'invention, notamment une diminution locale de l'épaisseur du cadre initial.

Dans des modes de réalisation préférés de l'invention, le noyau central comporte un réseau tridimensionnel de cloisons formées en matériau composite. Ces cloisons composites assurent avantageusement une stabilité globale du noyau central contre un flambage prématuré, et une capacité d'absorption accrue, grâce à leur capacité de dégradation propre.

Préférentiellement, de la mousse est intercalée entre lesdites cloisons, si bien qu'il est avantageusement apporté au noyau central une source de stabilisation supplémentaire. Cette mousse peut être de tout type connu de l'homme du métier, par exemple une mousse élastomère ou polymère préférentiellement à cellules fermées, à cellules ouvertes, ou de type à cellules alvéolaires connues sous le terme nid d'abeille, en aluminium ou en tout autre matériau.

Les cloisons peuvent tout aussi bien être continues que discontinues, selon qu'elles sont formées par des plaques stratifiées composites ou par des procédés de piquage/cloutage.

L'invention concerne également un aéronef comportant une structure de fuselage d'aéronef répondant aux caractéristiques ci-avant.

Un troisième objet de l'invention est un dispositif absorbeur d'énergie, destiné à reprendre des efforts de compression exercés sur un cadre de renfort circonférentiel d'une structure de fuselage d'aéronef, qui comporte deux organes effecteurs et un noyau central maintenu entre ces organes effecteurs de façon telle qu'une réduction de la distance entre les organes effecteurs induit une déformation du noyau central, ledit noyau central étant apte à absorber l'énergie sous l'effet de cette déformation. Ce dispositif répond en outre de préférence aux caractéristiques exposées ci-dessus, seules ou dans leurs combinaisons techniquement opérantes.

L'invention sera maintenant plus précisément décrite dans le cadre de modes de réalisation préférés, qui n'en sont nullement limitatifs, représentés sur les figures 1 à 11, dans lesquelles :
- la figure 1 représente en vue en perspective une partie inférieure d'un tronçon d'une structure de fuselage d'aéronef comportant un cadre de renfort circonférentiel selon l'invention ;
- la figure 2 montre en éclaté un dispositif absorbeur d'énergie selon un premier mode de réalisation de l'invention ;
- la figure 3 illustre en vue en perspective un dispositif absorbeur d'énergie selon un deuxième mode de réalisation de l'invention ;
- la figure 4 montre le dispositif de la figure 3 sectionné selon le plan A-A ;
- la figure 5 représente une vue partielle d'un dispositif absorbeur d'énergie selon un troisième mode de réalisation de l'invention, dans laquelle la partie interne du noyau central est partiellement illustrée en transparence ;
- la figure 6 montre le dispositif de la figure 2 fixé sur le cadre de la figure 1 ;
- la figure 7 représente le cadre de la figure 6 complété par des éléments de renfort latéraux selon l'invention ;
- la figure 8 montre en vue partiellement éclatée un dispositif absorbeur d'énergie selon un quatrième mode de réalisation de l'invention ;
- la figure 9 illustre le dispositif de la figure 8 en coupe selon le plan B-B ;
- la figure 10 illustre le dispositif de la figure 8 fixé sur le cadre de la figure 1 ;
- et la figure 11 représente de façon schématique une zone d'un cadre circonférentiel équipée d'un dispositif absorbeur d'énergie selon l'invention, déformée consécutivement à un impact exercé sur la structure de fuselage.

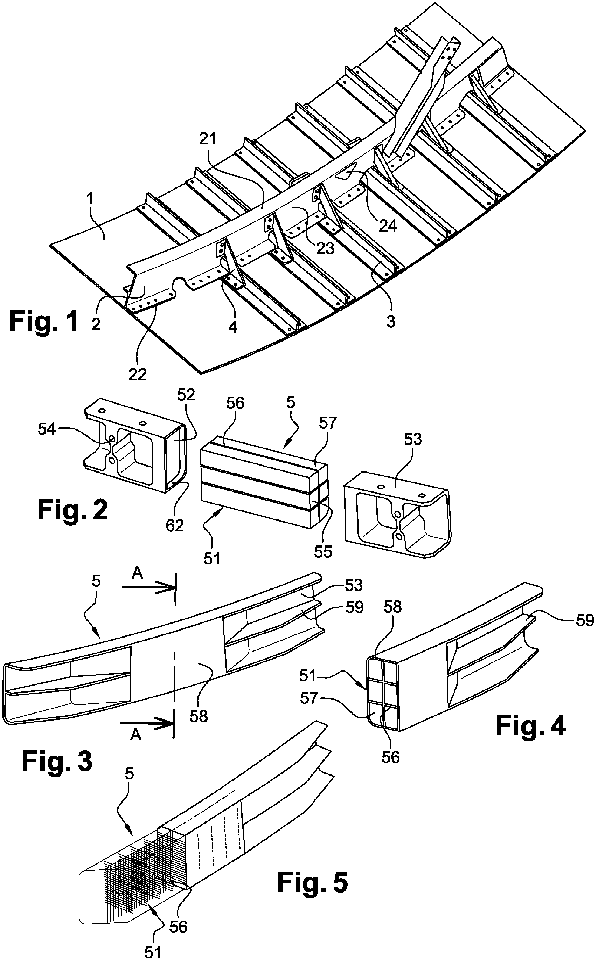

Une structure de fuselage d'aéronef se présente de façon classique sous forme d'une coque sensiblement cylindrique. Une partie inférieure d'une telle structure est représentée partiellement sur la figure 1. Elle comporte, de façon classique, un revêtement 1, ou peau, renforcé par une pluralité de cadres de renfort circonférentiels 2 s'étendant sensiblement perpendiculairement à un axe longitudinal de la structure, régulièrement répartis sur toute la longueur du fuselage, et une pluralité de lisses 3 fixées aux cadres sensiblement perpendiculairement à ces derniers, par des organes de fixation 4. Sur la figure 1, seul un cadre de renfort 2 a été représenté, les autres cadres étant formés de façon similaire.

Chaque cadre de renfort 2 présente une forme qui correspond sensiblement à la section locale du fuselage, le plus souvent circulaire. Il se présente selon l'invention sous forme d'un profilé comportant une face concave 21, une face convexe opposée 22 et deux faces latérales 23. La face concave est disposée vers l'intérieur de la structure de fuselage.

Selon l'invention, le cadre 2 comporte une zone affaiblie mécaniquement qui est apte à provoquer un flambage localisé du cadre sous l'effet d'un effort majoritaire de compression circonférentielle exercé sur lui, par exemple consécutif à un impact brutal de la structure de fuselage avec une surface dure, telle qu'une surface de sol ou d'eau. Dans le mode de réalisation préféré représenté sur la figure 1, cette zone affaiblie est formée par une échancrure radiale 24 ménagée dans l'épaisseur du cadre. Un tel mode de réalisation n'est cependant nullement restrictif de l'invention, et tout autre mode de réalisation d'une telle zone affaiblie connu de l'homme du métier entre également dans le cadre de l'invention, par exemple une diminution locale de l'épaisseur du cadre initial.

L'échancrure radiale 24 est de préférence située sur le cadre du côté de la face concave 21 de ce dernier, et elle s'évase en direction de ladite face concave. Selon les modes de réalisation, cette échancrure peut ou non s'étendre sur la face concave 21. La forme, le positionnement sur le cadre et les dimensions de cette échancrure sont déterminés par des calculs du ressort de l'homme du métier, en fonction notamment des caractéristiques du matériau constituant le cadre, de sorte à fixer la limite de flambage local du cadre, qui est piloté par cette échancrure, à un niveau souhaité, qui soit en outre découplé des charges statiques classiques de dimensionnement du cadre.

La structure de fuselage selon l'invention comporte en outre un dispositif absorbeur d'énergie 5 qui est solidaire du cadre 2, dont différentes variantes de réalisation seront décrites ci-après de manière détaillée en référence aux figures 2, 3 et 4, 5, 8 et 9, et qui présente pour caractéristique principale d'être apte à absorber l'énergie dissipée lors d'un effort de compression brutal exercé sur le cadre 2.

Un premier exemple de réalisation d'un dispositif absorbeur d'énergie 5 selon l'invention est représenté sur la figure 2.

Ce dispositif comporte un noyau central 51 qui est maintenu bloqué entre deux organes effecteurs, sous forme de plaques rigides 52, qui sont disposées sensiblement parallèlement l'une à l'autre de part et d'autre du noyau, en vis-à-vis de faces d'extrémité longitudinales 55 de ce dernier.

Les plaques 52 sont fixées à des pièces de liaison 53 destinées à être elles-mêmes fixées, notamment par vissage, au cadre 2 de la structure de fuselage, de part et d'autre de la zone affaiblie 24. A cet effet, les pièces de liaison 53 comportent des orifices 54 pour le passage d'organes de fixation au cadre 2, notamment du type vis.

Chaque pièce de liaison 53 forme de préférence, au-delà de l'organe effecteur 52 associé, un manchon 62 s'étendant en direction du noyau central 51, dans lequel ce dernier est partiellement inséré. Ce manchon 62 remplit, lorsqu'un effort de compression latérale est exercé sur le dispositif, une fonction de guidage du noyau central 51 vers l'organe effecteur 52 dans l'axe privilégié de la circonférence du cadre.

Dans le mode de réalisation représenté sur la figure 2, chaque plaque 52 est formée en monobloc avec la pièce de liaison 53 associée. L'ensemble est de préférence formé en matériau composite. Ces éléments constitutifs du dispositif 5 peuvent également être fixés les uns aux autres, par tout moyen de fixation classique en lui-même.

Le noyau central 51 peut quant à lui être solidaire, selon les configurations, de l'une ou des deux de ces plaques 52 et/ou pièces de liaison 53. Il peut aussi bien être formé en monobloc avec certains ou la totalité de ces éléments, que se présenter sous la forme d'une pièce distincte. Dans cette dernière configuration, sa fixation à ces éléments peut être effectuée par tout moyen connu de l'homme du métier, notamment par collage.

Les plaques rigides 52 sont de préférence configurées et dimensionnées de telle sorte que leur surface en vis-à-vis du noyau central coïncide au moins sensiblement avec la surface de la face d'extrémité longitudinale 55 de ce noyau.

Le noyau central 51 du dispositif absorbeur d'énergie selon l'invention peut se présenter sous diverses formes.

Dans le mode de réalisation préféré illustré sur la figure 2, il comporte un réseau tridimensionnel de cloisons continues 56, qui sont intercalées entre des barreaux de mousse 57. Cette mousse peut être de tout type. Il peut notamment s'agir d'une mousse élastomère ou polymère à cellules ouvertes ou fermées de préférence, ou de tout autre type de mousse, par exemple une mousse à cellules alvéolaires de type dit en nid d'abeille, formée en aluminium ou en tout autre matériau, étant entendu que dans le cadre de la mise en oeuvre sur un aéronef, les matériaux les plus légers sont particulièrement privilégiés. Dans l'exemple de réalisation particulier objet de la figure 2, les cloisons internes 56 sont au nombre de trois, et les barreaux de mousse au nombre de six, l'invention n'étant cependant nullement limitée à de tels nombres.

Dans une deuxième variante du dispositif absorbeur 5 selon l'invention, illustrée sur la figure 3, le noyau central, les organes effecteurs et les pièces de liaison sont formés en monobloc. Le noyau central est intégré dans une enveloppe externe en matériau composite 58. Des ailettes 59 raidissent le dispositif sur chaque partie, au niveau des pièces de fixation 53, de part et d'autre du noyau central. Comme montré sur la figure 4, en coupe selon le plan A-A, le noyau central 51 inclus dans l'enveloppe externe 58 est constitué de façon similaire au noyau central décrit ci-avant en référence à la figure 2. On y retrouve les cloisons internes 56 et les barreaux de mousse 57.

Une troisième variante d'un dispositif absorbeur 5 selon l'invention est illustrée sur la figure 5. Le dispositif qui y est représenté est formé en monobloc. Le noyau central 51, représenté partiellement en transparence, est dénué de barreaux de mousse. Les cloisons internes 56 sont discontinues. Un tel mode de réalisation assure avantageusement une maîtrise élevée de la dissipation d'énergie lors de la destruction du noyau, y compris dans des modes de sollicitations complexes.

De manière générale, la présence de mousse dans le noyau central offre l'avantage d'une meilleure stabilité de ce dernier en limitant les flambages locaux des cloisons, et ainsi de produire un mode de dégradation à haut niveau de dissipation d'énergie du noyau central. Les modes de réalisation du dispositif absorbeur selon l'invention dans lesquels le noyau central est un squelette creux, n'incluant pas de mousse, s'avèrent quant à eux plus avantageux en termes de masse. Le choix entre l'une ou l'autre de ces variantes est à la portée de l'homme du métier, qui tiendra notamment compte des exigences particulières édictées pour chaque type d'aéronef donné.

A titre d'exemples, des procédés de fabrication du dispositif absorbeur d'énergie 5 selon l'invention sont décrits ci-après. De façon générale, ces procédés de fabrication font appel aux technologies de mise en oeuvre de matériaux composites.

Selon un premier procédé de fabrication, mettant en oeuvre la technologie connue dite de RTM, pour l'anglais Resin Transfert Molding, qui est particulièrement adaptée à la formation de pièces de géométrie complexe, des préformes élémentaires simples en matériau à base de fibres, notamment de fibres de carbone, sont assemblées les unes aux autres de sorte à former une structure évoluée. L'ensemble de ces éléments est ensuite intégré dans un moule étanche à l'air, afin de procéder à l'injection d'une résine, notamment d'une résine du type époxyde. La polymérisation de la résine est assurée, de manière classique en elle-même, en étuve ou sous presse chauffante.

Dans le cas de noyaux centraux incluant des barreaux de mousse, ces barreaux sont drapés par des plis de fibres continues unidirectionnels, tissés ou tressés, préalablement à l'injection de résine. L'ensemble peut, selon les configurations souhaitées pour le dispositif, être drapé de plis externes de manière à former l'enveloppe externe 58, ces plis participant également le cas échéant, dans le cas d'un dispositif absorbeur formé en monobloc, à la formation des organes effecteurs 52 et des pièces de liaison 53.

De façon générale, le nombre et l'orientation des plis sont choisis selon des calculs à la portée de l'homme du métier, de sorte à optimiser le comportement d'absorption d'énergie et de distribution des contraintes souhaitées en fonctionnement du dispositif selon l'invention.

Dans le cadre de l'invention, les mousses à cellules fermées sont particulièrement préférées, puisqu'il est ainsi assuré qu'il ne se produise aucune pénétration de résine dans la mousse lors de l'injection de résine. L'invention s'applique cependant également aux mousses à cellules ouvertes. Il est alors avantageusement prévu lors de la fabrication, préalablement à l'injection de résine, d'intercaler une couche de protection étanche à la résine entre la mousse et les plis de fibres.

Selon un deuxième procédé de fabrication, visant à former un dispositif absorbeur d'énergie dont les cloisons internes sont discontinues, ces cloisons internes sont formées par piquage ou cloutage. Dans le cas du piquage, des mèches formées à base de fibres continues sèches ou pré-imprégnées de résine sont ainsi enfoncées à travers un bloc de mousse. Dans le cas du cloutage, des clous en matériau métallique ou composite, tels que des tiges formées à base de fibres continues et de résine polymérisée, sont enfoncés à travers un bloc de mousse. Les renforts transversaux ainsi constitués forment des cloisons internes discontinues. Après injection de la résine, dans le cadre de la mise en oeuvre d'un procédé dit de RTM, il est ensuite réalisé la polymérisation de la résine, de manière classique en elle-même. Dans le cas où le dispositif absorbeur est formé en monobloc, cette polymérisation est avantageusement réalisée en même temps que celle de la résine entrant dans la constitution des pièces de liaison et des organes effecteurs. Un tel mode de fabrication présente notamment l'avantage d'une grande versatilité en terme d'angle d'orientation donné aux cloisons à l'intérieur du bloc de mousse, ce qui permet de mieux s'adapter aux exigences particulières de chaque structure de fuselage donnée.

Lorsqu'on souhaite obtenir un noyau central sous la forme d'un squelette creux à cloisons discontinues, l'invention prévoit avantageusement de mettre en oeuvre, pour la fabrication, à la place du bloc de mousse, un bloc d'un matériau à capacité de dissolution, dans lequel sont insérés les clous. Le procédé de fabrication comporte alors, ultérieurement ou simultanément à l'étape assurant la polymérisation de la résine, une étape de traitement visant à la dissolution de ce matériau de sorte à obtenir le squelette creux souhaité.

Les procédés de fabrication tels que décrits ci-avant s'avèrent notamment tout à fait avantageux en ce qu'ils peuvent être mis en oeuvre à bas coût, tout en permettant l'intégration au dispositif d'éléments fonctionnels, tels que les pièces de liaison, si bien que le nombre d'éléments distincts à fabriquer peut être limité et les temps d'assemblage réduits. L'architecture interne du noyau central peut en outre être facilement optimisée en nombre de plis, drapage, section, selon la réponse aux contraintes souhaitée en fonctionnement d'absorption.

Le dispositif absorbeur d'énergie 5 peut également être fabriqué de toutes autres manières connues de l'homme du métier. En particulier, il peut être formé à partir de profilés pultrudés, creux ou remplis de mousse, de sorte à répondre à des exigences d'application de process industriels et de fabrication en série.

Le dispositif absorbeur 5 selon l'invention peut être fixé au cadre 2 aussi bien au cours du procédé de fabrication de ce dernier, hors ligne d'assemblage de la structure de fuselage, qu'après cet assemblage.

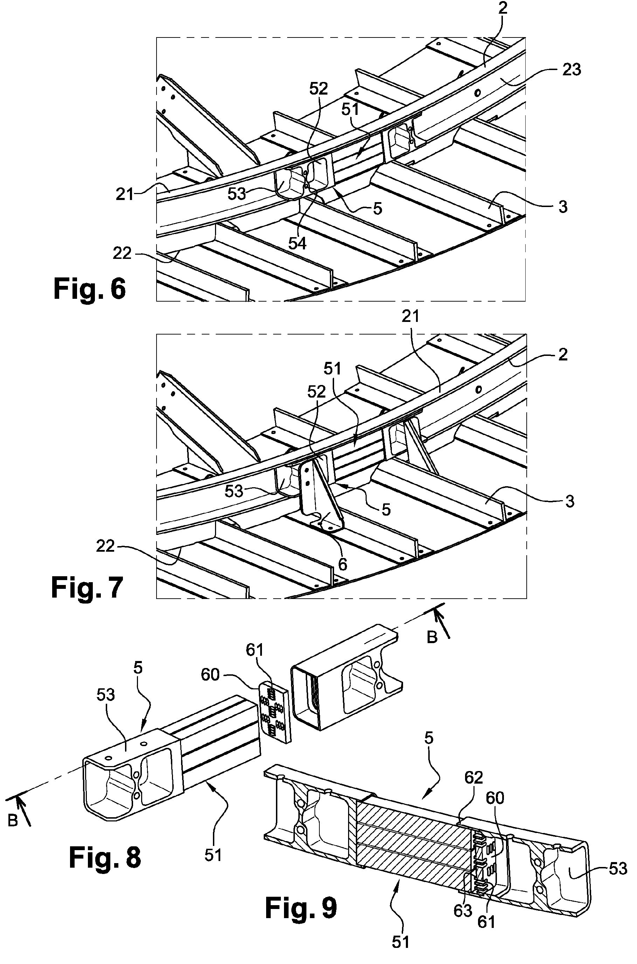

Ce dispositif 5 est représenté sur la figure 6 assemblé à une partie inférieure du cadre 2. Dans le mode de réalisation préféré de l'invention illustré sur cette figure, il est positionné contre la face latérale 23 du cadre, de sorte à s'étendre selon la direction circonférentielle, et à ce que les organes effecteurs 52 soient disposés de part et d'autre de l'échancrure 24 formée sur le cadre 2. De préférence, le dispositif est disposé de telle sorte que cette échancrure 24, qui n'apparaît pas sur cette figure, soit située sensiblement au droit d'un axe médian du dispositif s'étendant entre les faces convexe 22 et concave 21 du cadre.

La fixation du dispositif absorbeur 5 au cadre 2 s'effectue par l'intermédiaire des pièces de liaison 53, par des organes de fixation classiques en eux-mêmes, insérés à travers les orifices 54 des pièces de liaison et solidarisés au cadre 2.

Dans des modes de réalisation préférés de l'invention, comme illustré sur la figure 7, il est en outre prévu des éléments de renfort latéraux 6 fixés chacun respectivement d'une part à une pièce de liaison 53, et d'autre part à un pied d'une lisse 3 disposée sensiblement en vis-à-vis de ladite pièce de liaison. A cet effet, il est avantageusement prévu selon l'invention que l'écart entre les pièces de liaison soit sensiblement égal à l'écart entre deux lisses 3 de la structure de fuselage, et que le dispositif absorbeur soit disposé sur le cadre 2 de telle sorte que chaque pièce de liaison 53 coïncide sensiblement avec une lisse.

L'élément de renfort latéral 6 est de préférence fixé à la pièce de liaison par l'intermédiaire des orifices 54, par le ou les même(s) organe(s) de fixation que ceux utilisés pour la fixation de la pièce de liaison 53 au cadre 2. Ainsi, cet organe de fixation, notamment une vis, lie l'élément de renfort latéral 6 au cadre 2, à travers la pièce de liaison 53.

Les éléments de renfort latéraux 6 permettent avantageusement au dispositif absorbeur 5 de rester dans l'alignement du cadre 2 le plus longtemps possible lorsqu'un effort brutal de compression selon la direction circonférentielle est exercé sur lui.

En opération de l'aéronef, la structure de fuselage selon l'invention se comporte de la façon suivante.

Dans des conditions d'exploitation normales de l'aéronef, le dispositif absorbeur 5 peut, selon sa configuration, comme il a été exposé ci-avant, participer ou non à la tenue élastique aux charges courantes quasi-statiques correspondant à des sollicitations normales rencontrées par le cadre. En particulier, dans la configuration particulièrement avantageuse dans laquelle le noyau central 51 n'est pas fixé à un au moins des organes effecteurs 52, il n'y participe pas.

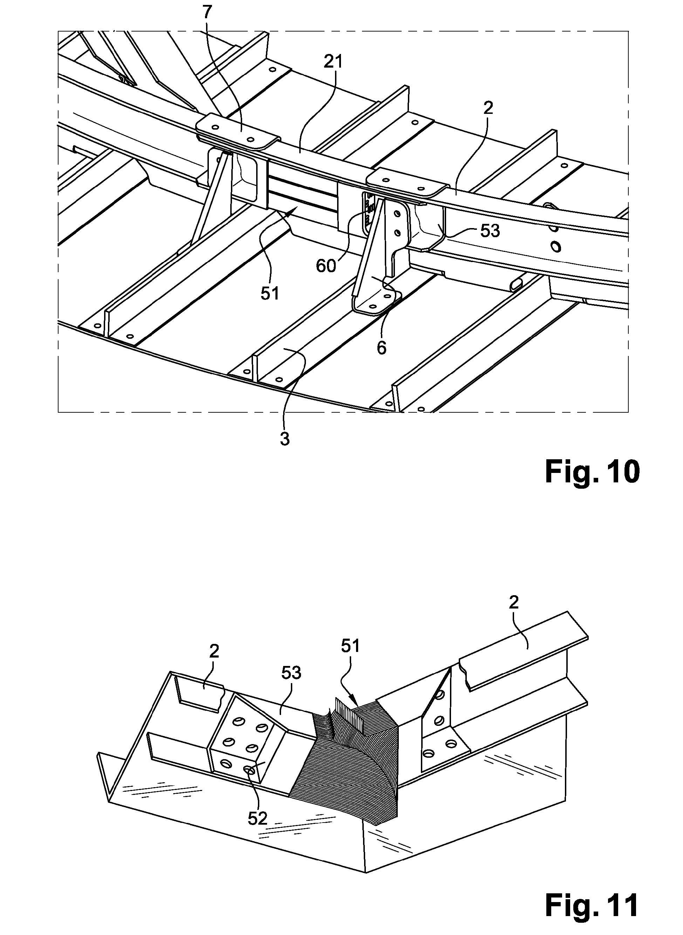

Lors d'un crash, lorsque le cadre 2 subit un impact brutal, il est exercé sur le cadre un effort majoritairement de compression circonférentielle. Selon l'invention, il est alors assuré, par l'échancrure 24 formée sur le cadre 2, un flambage localisé du cadre 2 dans la zone dans laquelle est fixé le dispositif absorbeur 5, ce qui a pour effet de déclencher l'absorption d'énergie par le dispositif. Ce dernier se comprime alors latéralement, comme illustré sur la figure 11, et les deux organes effecteurs 52 se rapprochent l'un de l'autre. Le noyau central 51, maintenu entre lesdits organes effecteurs, se déforme et se dégrade progressivement, absorbant alors l'énergie générée lors de l'impact.

En référence à la figure 8, une quatrième variante de réalisation du dispositif absorbeur 5 selon l'invention, dérivée de la première variante illustrée sur la figure 2, est présentée. Selon cette variante, un des organes effecteurs 52 se présente sous la forme d'une plaque rigide 60 percée de lumières traversantes 61. Conformément à l'invention, cet organe effecteur 60, qui peut être réalisé en un matériau à haut degré de rigidité, notamment en métal durci, n'est pas fixé au noyau central 51. Il est disposé de telle sorte que les lumières traversantes 62 s'étendent transversalement au noyau central 51, comme illustré sur la figure 9. Le dispositif absorbeur comporte en outre des moyens de guidage du noyau central vers la plaque rigide 60. Ces moyens de guidage sont notamment constitués, dans le mode de réalisation préféré de l'invention illustré sur cette figure 9, par une extension du manchon 62 de la pièce de liaison au-delà de la plaque rigide 60, à l'intérieur duquel le noyau est partiellement engagé.

Les lumières traversantes 62 comportent en outre de préférence des bordures périphériques 63 faisant saillie sur une face de la plaque 60 disposée en vis-à-vis du noyau central 5.

Ce dispositif absorbeur 5 peut être assemblé sur le cadre 2 de la manière exposée précédemment, comme représenté sur la figure 10. Sur cette figure, on a en outre représenté des pattes 7 assurant une fixation supplémentaire des pièces de liaison 53 au cadre 2, au niveau de la face concave 21 du cadre. Ces pattes de liaison 7 sont de préférence fixées par ailleurs aux organes 4 de fixation du cadre 2 aux lisses 3 (qui ne sont pas visibles sur la figure 10).

Dans une telle configuration avantageuse de l'invention, lorsque les organes effecteurs 52 se rapprochent l'un de l'autre sous l'effet d'un flambage local du cadre à cet endroit, la matière constituant le noyau central 51, guidée en direction de la plaque rigide 60, est hachée à travers les lumières 61 de cette dernière, ce qui accroit avantageusement l'effet d'absorption d'énergie par le dispositif selon l'invention. Les bordures saillantes 63 permettent en outre avantageusement d'initier la découpe du noyau central 51, plus particulièrement des cloisons internes 56, et de réduire ainsi le pic d'effort lors du contact entre le noyau central 51 et la plaque rigide 60.

La description ci-avant illustre clairement que par ses différentes caractéristiques et leurs avantages, la présente invention atteint les objectifs qu'elle s'était fixés. En particulier, elle fournit une structure de fuselage d'aéronef qui comporte un dispositif absorbeur d'énergie à noyau passif à capacité de dégradation intrinsèque, associé à un cadre de renfort circonférentiel, qui répond aux exigences de tenue au crash, en satisfaisant au besoin d'absorption d'énergie due à ce crash, et ce même lorsque cette structure est formée en matériau composite. Le dispositif absorbeur d'énergie selon l'invention est en outre simple, rapide et peu onéreux à fabriquer et à assembler sur la structure de fuselage.

Le dispositif absorbeur d'énergie selon l'invention peut en outre trouver application de manière similaire dans d'autres domaines, par exemple dans le domaine de la construction automobile, dans lesquels il peut notamment être associé à un cadre non pas circonférentiel mais droit, et auquel il peut être adapté par des modifications structurelles mineures à la portée de l'homme du métier, tout en conservant la même fonction avantageuse.

## Revendications

1. Structure de fuselage d'aéronef, comportant un cadre de renfort circonférentiel (2) présentant une face concave (21) et une face convexe opposée (22), et une pluralité de lisses (3) sensiblement perpendiculaires audit cadre, **caractérisée en ce que** ledit cadre comporte une zone affaiblie mécaniquement apte à provoquer un flambage localisé du cadre sous l'effet d'un effort de compression exercé sur ledit cadre selon la direction circonférentielle, et **en ce qu'**elle comporte un dispositif dit absorbeur d'énergie (5) comportant deux organes effecteurs (52) solidaires du cadre respectivement de part et d'autre de ladite zone affaiblie, et un noyau central (51) maintenu entre lesdits organes effecteurs de façon telle qu'une réduction de la distance entre lesdits organes effecteurs induit une déformation dudit noyau central, ledit noyau central étant apte à absorber l'énergie sous l'effet de ladite déformation.

2. Structure de fuselage d'aéronef selon la revendication 1, **caractérisée en ce que** le noyau central (51) est fixé aux deux organes effecteurs (52).

3. Structure de fuselage d'aéronef selon la revendication 1, **caractérisée en ce que** le noyau central (51) est fixé à un seul organe effecteur (52).

4. Structure de fuselage d'aéronef selon l'une quelconque des revendications 1 à 3, **caractérisée en ce qu'**un premier organe effecteur est une plaque rigide (60) percée de lumières traversantes (61).

5. Structure de fuselage d'aéronef selon la revendication 4, **caractérisée en ce que** ledit premier organe effecteur (60) n'est pas fixé au noyau central (51) du dispositif absorbeur d'énergie.

6. Structure de fuselage d'aéronef selon l'une quelconque des revendications 1 à 5, **caractérisée en ce que** les organes effecteurs (52) sont fixés au cadre (2) par l'intermédiaire de pièces de liaison (53) fixées au cadre respectivement de part et d'autre de ladite zone affaiblie.

7. Structure de fuselage d'aéronef selon la revendication 6, **caractérisée en ce que** le noyau central (51), les organes effecteurs (52) et les pièces de liaison (53) sont formés en monobloc.

8. Structure de fuselage d'aéronef selon la revendication 6 ou 7, **caractérisée en ce que** le dispositif absorbeur d'énergie (5) comporte des éléments de renfort latéraux (6) fixés d'une part aux pièces de liaison (53) et d'autre part à des lisses (3) de ladite structure de fuselage.

9. Structure de fuselage d'aéronef selon l'une quelconque des revendications 1 à 8, **caractérisée en ce que** la zone affaiblie mécaniquement est formée par une échancrure radiale (24) ménagée dans le cadre (2), ladite échancrure débouchant de préférence sur la face concave (21) du cadre.

10. Structure de fuselage d'aéronef selon l'une quelconque des revendications 1 à 9, **caractérisée en ce que** le noyau central (51) comporte un réseau tridimensionnel de cloisons internes (56) en matériau composite.

11. Structure de fuselage d'aéronef selon la revendication 10, **caractérisée en ce que** de la mousse (57) est intercalée entre lesdites cloisons internes (56).

12. Structure de fuselage d'aéronef selon l'une quelconque des revendications 1 à 11, **caractérisée en ce que** ladite zone affaiblie et le dispositif absorbeur d'énergie (5) sont disposés dans une partie dite inférieure de ladite structure.

13. Aéronef comportant une structure de fuselage selon l'une quelconque des revendications 1 à 12.

## Patentansprüche

1. Fluggerätrumpfstruktur, umfassend einen Umfangsverstärkungsrahmen (2), der eine konkave Fläche (21) und eine gegenüberliegende konvexe Fläche (22), aufweist, und eine Vielzahl von Längsversteifungen (3), die im Wesentlichen senkrecht zum Rahmen verlaufen, **dadurch gekennzeichnet, dass** der Rahmen einen mechanisch geschwächten Bereich umfasst, der geeignet ist, ein lokalisiertes Knicken des Rahmens unter der Wirkung einer in der Umfangsrichtung auf den Rahmen ausgeübten Druckkraft hervorzurufen und dass sie eine so genannte Energieabsorbiervorrichtung (5) umfasst, die zwei Effektorglieder (52) umfasst, die jeweils beiderseits des geschwächten Bereichs fest mit dem Rahmen verbunden sind, sowie einen mittleren Kern (51), der so zwischen den Effektorgliedern gehalten ist, dass eine Reduzierung des Abstands zwischen den Effektorgliedern eine Deformierung des mittleren Kerns einleitet, wobei der mittlere Kern geeignet ist, die Energie unter der Wirkung der Deformierung zu absorbieren.

2. Fluggerätrumpfstruktur nach Anspruch 1, **dadurch gekennzeichnet, dass** der mittlere Kern (51) an den beiden Effektorgliedern (52) befestigt ist.

3. Fluggerätrumpfstruktur nach Anspruch 1, **dadurch gekennzeichnet, dass** der mittlere Kern (51) an einem einzigen Effektorglied (52) befestigt ist.

4. Fluggerätrumpfstruktur nach einem der Ansprüche 1 bis 3, **dadurch gekennzeichnet, dass** ein erstes Effektorglied eine von durchgehenden Langlöchern (61) durchbrochene starre Platte (60) ist.

5. Fluggerätrumpfstruktur nach Anspruch 4, **dadurch gekennzeichnet, dass** das erste Effektorglied (60) nicht am mittleren Kern (51) der Energieabsorbiervorrichtung befestigt ist.

6. Fluggerätrumpfstruktur nach einem der Ansprüche 1 bis 5, **dadurch gekennzeichnet, dass** die Effektorglieder (52) über Verbindungsstücke (53) am Rahmen (2) befestigt sind, die jeweils beiderseits des geschwächten Bereichs am Rahmen befestigt sind.

7. Fluggerätrumpfstruktur nach Anspruch 6, **dadurch gekennzeichnet, dass** der mittlere Kern (51), die Effektorglieder (52) und die Verbindungsstücke (53) einteilig ausgebildet sind.

8. Fluggerätrumpfstruktur nach Anspruch 6 oder 7, **dadurch gekennzeichnet, dass** die Energieabsorbiervorrichtung (5) seitliche Verstärkungselemente (6) umfasst, die einerseits an den Verbindungsstücken (53) und andererseits an Längsversteifungen (3) der Rumpfstruktur befestigt sind.

9. Fluggerätrumpfstruktur nach einem der Ansprüche 1 bis 8, **dadurch gekennzeichnet, dass** der mechanisch geschwächte Bereich durch eine im Rahmen (2) ausgeführte radiale Aussparung (24) gebildet ist, die vorzugsweise an der konkaven Fläche (21) des Rahmens mündet.

10. Fluggerätrumpfstruktur nach einem der Ansprüche 1 bis 9, **dadurch gekennzeichnet, dass** der mittlere Kern (51) ein dreidimensionales Netz aus inneren Wänden (56) aus Verbundwerkstoff umfasst.

11. Fluggerätrumpfstruktur nach Anspruch 10, **dadurch gekennzeichnet, dass** zwischen den inneren Wänden (56) Schaumstoff (57) eingeführt ist.

12. Fluggerätrumpfstruktur nach einem der Ansprüche 1 bis 11, **dadurch gekennzeichnet, dass** der geschwächte Bereich und die Energieabsorbiervorrichtung (5) in einem so genannten unteren Teil der Struktur angeordnet sind.

13. Fluggerät, umfassend eine Rumpfstruktur nach einem der Ansprüche 1 bis 12.

## Claims

1. Aircraft fuselage structure, comprising a circumferential reinforcing frame (2) having a concave face (21) and an opposite convex face (22), and a plurality of stringers (3) substantially perpendicular to said frame, **characterized in that** said frame comprises a mechanically weakened area able to cause a localized buckling of the frame under the effect of a compressive force exerted on said frame in the circumferential direction, and **in that** it comprises an energy absorbing device (5) comprising two effector members (52) secured to the frame respectively on either side of the weakened area, and a central core (51) maintained between said effector members such that a reduction in the distance between said effector members produces a deformation of said central core, said central core being able to absorb the energy under the effect of said deformation.

2. Aircraft fuselage structure according to claim 1, **characterized in that** the central core (51) is fixed to the two effector members (52).

3. Aircraft fuselage structure according to claim 1, **characterized in that** the central core (51) is fixed to only one effector member (52).

4. Aircraft fuselage structure according to any one of claims 1 to 3, **characterized in that** a first effector member is a rigid plate (60) pierced by through-openings (61).

5. Aircraft fuselage structure according to claim 4, **characterized in that** said first effector member (60) is not fixed to the central core (51) of the energy absorbing device.

6. Aircraft fuselage structure according to any one of claims 1 to 5, **characterized in that** the effector members (52) are fixed to the frame (2) by means of connecting parts (53) fixed to the frame respectively on either side of said weakened area.

7. Aircraft fuselage structure according to claim 6, **characterized in that** the central core (51), effector members (52) and connecting parts (53) are made in a single piece.

8. Aircraft fuselage structure according to claim 6 or 7, **characterized in that** the energy absorbing device (5) comprises lateral reinforcing elements (6) fixed firstly to the connecting parts (53) and secondly to stringers (3) of said fuselage structure.

9. Aircraft fuselage structure according to any one of claims 1 to 8, **characterized in that** the mechanically weakened area is produced by a radial cut-out (24) formed in the frame (2), said cut-out preferably emerging on the concave face (21) of the frame.

10. Aircraft fuselage structure according to any one of claims 1 to 9, **characterized in that** the central core (51) comprises a three-dimensional network of inner walls (56) made of composite material.

11. Aircraft fuselage structure according to claim 10, **characterized in that** foam (57) is interposed between said inner walls (56).

12. Aircraft fuselage structure according to any one of claims 1 to 11, **characterized in that** said weakened area and the energy absorbing device (5) are positioned in a part called lower part of said structure.

13. Aircraft comprising a fuselage structure according to any one of claims 1 to 12.
